(19) Europäisches Patentamt
European Patent Office
Office européen des brevets

(11) Publication number: **0 151 370 B1**

# (12) EUROPEAN PATENT SPECIFICATION

(45) Date of publication of patent specification: **14.03.90**

(51) Int. Cl.[5]: **D 06 P 1/52,** D 06 L 3/12, D 06 M 15/37, C 08 G 12/40, D 06 P 5/08 // D06P3/60

(21) Application number: **84810651.4**

(22) Date of filing: **20.12.84**

## (54) Dyeing amd printing fibres.

(30) Priority: **03.01.84 DE 3400052**
**09.03.84 DE 3408639**
**09.03.84 DE 3408640**
**09.03.84 DE 3408642**
**09.03.84 DE 3408643**
**09.05.84 GB 8411827**

(43) Date of publication of application:
**14.08.85 Bulletin 85/33**

(45) Publication of the grant of the patent:
**14.03.90 Bulletin 90/11**

(84) Designated Contracting States:
**AT BE CH DE FR GB IT LI NL**

(56) References cited:
**BE-A- 632 096**
**CH-A- 7 954**
**CH-B- 386 983**
**DE-A-3 209 799**
**GB-A-2 099 007**
**US-A-3 734 889**
**US-A-4 410 652**

(73) Proprietor: **SANDOZ AG**
**Lichtstrasse 35**
**CH-4002 Basel (CH)**

(73) Proprietor: **COURTAULDS PLC**
**18, Hanover Square**
**London W1A 2BB (GB)**

(72) Inventor: **Heller, Jürg**
**Im Thomasgarten 6**
**CH-4104 Oberwil (CH)**
Inventor: **Kissling, Bruno**
**Schluchtweg 227**
**CH-4614 Hagendorf (CH)**
Inventor: **Robinson, Tibor**
**Gellertstrasse 45**
**CH-4052 Basel (CH)**
Inventor: **Valenti, Salvatore**
**Im Rehwechsel 37**
**CH-4102 Binningen (CH)**
Inventor: **Ginns, Peter**
**11 St. John's Road**
**Smalley Derbyshire DE7 6EG (GB)**
Inventor: **Taylor, James Martin**
**30 Thorness Close**
**Alverston Derby (GB)**

**EP 0 151 370 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the dyeing, printing and optical brightening of textile fibres.

It is known from US Patents 4,410,652, 4,439,203 (= GBP 2,099,007 A) and 4,439,208 that the fastness properties of direct, reactive and basic dyeings on textile fibres may be improved by aftertreatment with certain cationic fixing agents based upon the reaction products of amines with cyanamide, dicyandiamide, guanidine and bisguanidine. It has now been found that pretreatment with the same or similar agents improves the dyeing and brightening properties of textile fibres giving improved colour yields and the capacity to be dyed by novel dyeing routes, in addition to improved wet fastness of the resulting dyeings.

Belgian Patent 632,096 describes the pre-treatment of fibres (e.g. cellulosic fibres) with the reaction product of a polymeric compound (of the type defined as A below) with formaldehyde.

DOS 3,209,799 describes the pre-treatment of a textile material with the reaction product of a polymeric compound (of the type defined as A below) with an N-methylol compound and a crosslinking catalyst.

According to the invention there is provided a process for the dyeing, printing or optical brightening of cellulosic textile fibres by pretreating the fibres before the dyeing, printing or brightening step with a polymeric compound comprising

(A) a polymeric reaction product of a monofunctional or polyfunctional amine having one or more primary and/or secondary and/or tertiary amino groups with cyanamide, dicyandiamide, guanidine or bisguanidine in which up to 50 mole per cent of the cyanamide, dicyandiamide, guanidine or bisguanidine may be replaced by a dicarboxylic acid or a mono- or di-ester thereof, said product (A) containing at least one free hydrogen atom linked to a nitrogen atom;

said polymeric compound being either in free base or wholly or partly in acid addition salt form; characterized in that the pretreatment process comprises applying the polymeric compound to the fibres in a concentration which allows at least 0.6% wt. of the polymeric compound, based on the dry fibre weight to become fixed to the fibres, and subsequently rinsing the fibres to remove any unfixed compound.

The textile fibres are preferably hydroxy group-containing fibres, particularly natural or regenerated cellulosic fibres, especially cotton. Useful results are also obtainable on nitrogen-containing fibres such as polyacrylonitrile and natural or synthetic polyamides, preferably wool, silk or nylon. Acid modified polyester and polyamide, which contain acidic hydroxy groups, may also be used.

The fibres may be in the form of loose fibres or yarns or fabrics, or in any suitable form. Fabrics are a convenient and preferred form. The fibres may be blended with other fibres which are susceptible of treatment by the process of the invention or with fibres which are not so susceptible. For example, cotton and regenerated cellulose fibres may be blended together or individually with polyester fibres, the latter being dyed with disperse dyes. Fibre blends and yarn blends may be used.

The process may also be used in the dyeing of leather.

The pretreated fibres may be dyed or printed with anionic dyestuffs, including direct dyes, acid dyes and reactive dyes, or with basic dyestuffs. Preferred dyes are direct dyes, preferably those having at least two sulphonic acid or sulphonamide groups in the dye molecule, more preferably 3—8 such groups, particularly 4—6. Particularly preferred are highly substantive direct dyes which show a high degree of exhaust on cotton when dyed by the conventional exhaust process. Preferably the direct dyes have a molecular weight above 1000, more preferably above 1200. Preferably the direct dyes are in the form of 1:1 or 1:2 metal complexes, particularly copper complexes.

Particularly suitable direct dyes are those meeting the criteria set out in US Patent 4 410 652, the dyes whose formulae are listed in that US patent, and those listed in US Patent 4 439 203 under their Colour Index numbers.

A further group of particularly suitable dyes have the properties both of direct dyes and of reactive dyes. They are highly substantive as described above, and also contain in their molecule one or more halogens attached to aromatic heterocyclic rings, which can be split off as an anion under alkali fixation conditions. Preferred dyestuffs of this type contain one or two mono- or di-halo (particularly chloro-) substituted triazinyl groups.

Examples of dyestuffs with one such group correspond to formula I

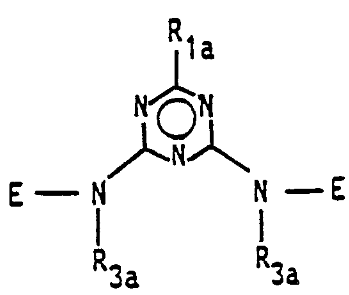

I

in which

each $R_{3a}$ independently is hydrogen; $(C_{1-4})$alkyl; or $(C_{1-4})$alkyl substituted by one —OH, —CN or phenyl group;

$R_{1a}$ is Cl or F, particularly Cl
and E are identical or different chromophoric groups.
Examples of dyestuffs with two triazinyl groups are those of formula II

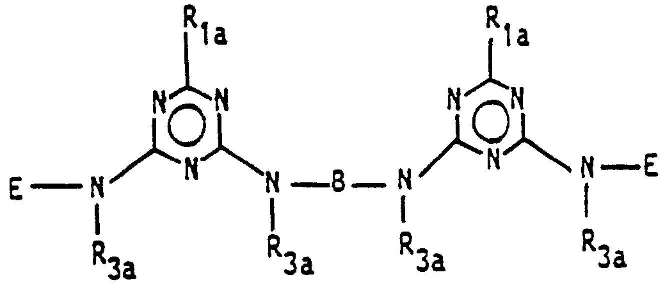

II

in which $R_{1a}$, $R_{3a}$ and E are as defined above, and B is a direct bond or a divalent aliphatic, aromatic, cycloaliphatic or heterocyclic bridging group, or forms a heterocyclic bridging group together with the two

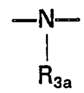

groups to which it is joined.

In the compounds of formulae I and II, the chromophoric group E can be identical or different residues of mono- or polyazo dyes, or of anthraquinone, stilbene, hydrazone, methine or azo-methine dyes, in which the mono- or polyazo dye residues may be in the form of 1:1 or 1:2 metal complexes, such as 1:1 copper, chromium, cobalt, nickel or manganese or 1:2 chromium, cobalt or iron complexes.

The bridging group B is preferably of formula

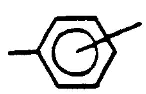 or 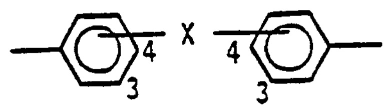

in which X can be bound in the 4,4-, 3,4- or 3,3-positions and represents a direct bond or a bridging group such as is conventional in the chemistry of direct dyestuffs, or may form a piperazine ring together with the two

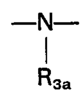

groups to which it is bound.

Suitable triazinyl group-containing dyestuffs are disclosed in British published Patent Applications 2,106,126 A, 2,111,538 A and 2,122,634 A.

Suitable dyestuffs for use in dyeing polyamide pretreated according to the invention are known under the description of C.I. Acid Dyes.

The pretreated textile fibres may be dyed or printed with reactive dyes, particularly those containing a 5- or 6-membered heterocyclic ring having aromatic character and containing 2 or 3 nitrogen atoms, which is substituted by 1—3 halogen atoms which can be split off as anions during fixation. The reactive group can also be a vinylsulphonyl-, vinylcarbonyl-, sulphato- or sulphate ester group. Such dyes are known under the designation C.I. Reactive Dyes.

Suitable reactive dyes include C.I. Reactive Reds 2, 6, 8, 120, 123 and 171; C.I. Reactive Blues 94, 104, 114, 116, 163, 168, 172 and 193; C.I. Reactive Yellows 7, 84 and 111; C.I. Reactive Oranges 4, 14 and 69; C.I. Reactive Browns 10 and 23; C.I. Reactive Black 8 and C.I. Reactive Violet 33.

Basic dyestuffs suitable for use in conjunction with the pretreatment step according to the invention are generally those designated as C.I. Basic Dyes. They contain protonatable primary, secondary or tertiary amino groups and/or quaternary ammonium groups, and may also contain sulphonic acid groups, provided that the number of basic groups is higher than the number of acid groups in the molecule. Basic dyes may also be in the form of 1:1 or 1:2 metal complexes. Suitable basic dyes are described for example in US Patent 4 439 208.

In addition to the above-mentioned anionic and basic dyes, it is also possible to dye or print the treated textile fibres with phthalocyanine, sulphur, vat, formazan, di- or tri-phenylmethane or indigo dyestuffs.

Optical brighteners may also be used, preferably anionic optical brighteners which are substantive to cotton. After the substrate has been pretreated according to the invention it may also be possible to use cationic brighteners.

The polymeric compound (A) is preferably the reaction product of an amine of formula III

$$R—NH—R \qquad III$$

or, preferably, a polyalkylene polyamine of formula IV

$$RRN{-}(Z{-}X)_n{-}Z{-}NRR \qquad IV$$

in which

each R independently is hydrogen or a $C_{1-10}$alkyl group unsubstituted or monosubstituted with hydroxy, $C_{1-4}$alkoxy or cyano,

n is a number from 0 to 100

Z, or each Z independently when n>0, is $C_{2-4}$ alkylene or hydroxyalkylene

and X, or each X independently when n>1, is —O—, —S— or —NR— where R is as defined above, provided that the amine of formula IV contains at least one reactive —NH— or —$NH_2$ group, with cyanamide, dicyandiamide (DCDA), guanidine or bisguanidine.

More preferably each R in IV is hydrogen, n is 0 to 4, X is NH or —$NCH_3$— and Z, or each Z independently when n>0, is $C_{2-4}$ alkylene. Particularly preferred compounds are diethylene triamine, triethylene tetramine, tetraethylene pentamine, 2-aminoethyl-3-aminopropylamine, dipropylene triamine and N,N-bis-(3-aminopropyl)methylamine.

Components A are known, and may be prepared by the methods described for example in British Patent No. 657 753, US Patent No. 2 649 354 and US Patent 4 410 652. Suitably the amine, in free base or salt form, is reacted with the other starting material in the absence of water at elevated temperatures optionally in the presence of a non-aqueous solvent. Preferably the reaction is carried out in the absence of solvent at a temperature of 140—160°C, and for most combinations of reagents, ammonia is evolved. The reagents are preferably reacted in a molar ratio of 0.1 to 1 mole of cyanamide, DCDA, guanidine or biguanidine per mole of reactive —NH or —$NH_2$ groups, and when DCDA is reacted with a polyalkylene polyamine, the molar ratio of the reactants is more preferably from 2:1 to 1:2, particularly about 1:1.

The products (A) are near-colourless viscous liquids or solids which are basic in character, watersoluble either in the free base or salt form, and contain reactive hydrogen atoms bonded to nitrogen.

Up to 50% mole, preferably up to 20% mole of the DCDA or other reagent to be reacted with the amine may be replaced by a dicarboxylic acid or a mono- or di-ester thereof. Suitable acids include adipic acid, oxalic acid and terephthalic acid, for example in the form of their dimethyl esters.

Particularly preferred compounds (A) are the reaction products of DCDA with diethylenetriamine or triethylenetetramine.

The pretreated and dyed fabric may be aftertreated with an aftertreatment agent comprising a reaction product of (A) with a) — an N-methylol derivative of a urea, melamine, guanamine, triazine, urone, urethane or acid amide; or with c) — formaldehyde or a compound that releases formaldehyde; together with a catalyst, which further increases the wet fastness properties of the dyeing and at the same time imparts crease resistant finish to the goods.

The aftertreatment may also involve simultaneous or sequential application of a reaction product of A with an N-methylol compound a) e.g. the product of Example 1 of US Patent 4,410,652.

Reaction products (precondensates) of (A) with compound (a), i.e. an N-methylol derivative of urea, melamine, guanamine, triazine, urone, urethane or acid amide are described in US Patent 4,410,652, the entire disclosure of which is incorporated herein by reference. Preferred N-methylol compounds are hydrolysis-resistant reactive resin precursors, for example N,N'-dimethylol-4,5-dihydroxyethyleneurea or -4,5-dimethoxyethyleneurea, N,N'-dimethylol-4-methoxy-5,5-dimethylpropyleneurea and N,N'-dimethylol carbamates, optionally in etherified form. Preferred ether forms are the methyl and ethyl ether derivatives.

Reaction products of (A) with (c) formaldehyde or a formaldehyde precursor (e.g. paraformaldehyde) optionally together with (a) are also described in US Patent 4,439,203. The reaction is preferably carried out in an aqueous medium at a temperature from 20° to 60°C, preferably 40 to 50°C and at a pH>4, preferably between 7 and 11. The formaldehyde may be added in the form of a concentrated (e.g. 37%) aqueous solution. Preferred mole ratios of compound A to formaldehyde are in the range 1:2—1:6, based on the number of moles of amine originally present.

Suitable catalysts are listed in US Patent 4,439,203.

Preferred catalysts are the nitrates, sulphates, chlorides and dihydrogen orthophosphates of aluminium, magnesium or zinc, more preferably of magnesium, particularly magnesium chloride, optionally together with an alkali metal sulphate, particularly sodium sulphate.

When the pretreatment agent is (A) alone, continuous application processes may also be used but the preferred method is by exhaust application.

Further, a process according to the invention may include the additional step of aftertreating the fibres with the reaction product of (A) with (d) an organic compound containing at least two groups capable of being split off as anions on reaction with A.

Preferred compounds (d) are of formula V

$$Y{-}R_1{-}Y \qquad V$$

in which each Y independently is a halogen atom and $R_1$ is a group of formula

(α)

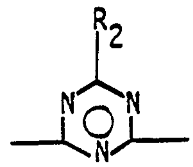

(β)

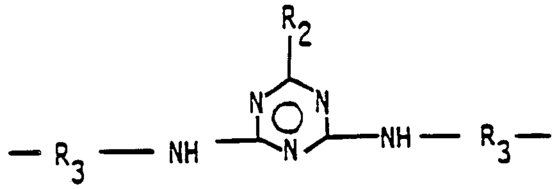

or (γ) a $(C_{2-12})$alkylene group which may be substituted by one —OH or $(C_{1-4})$alkoxy group and which may be interrupted by one —NH—, $—NR_4—$ or

$$—N^{\oplus}R_4R_4— \quad A^{\ominus}$$

group, and/or by —O—, and/or by —S—,
in which

$R_2$ is halogen or a group $—OR_5$ or $—NR_6R_5$

each $R_3$ independently is a straight or branched chain $(C_{1-8})$alkylene group

each $R_4$ independently is $(C_{1-8})$alkyl, preferably $(C_{1-4})$alkyl, which may be substituted by one —OH, —CN or $—NR_6R_5$ group

each $R_5$ independently is hydrogen or a $(C_{1-4})$alkyl group which may be substituted by one halogen, —OH, —CN, $—NR_6R_6$ or $—N^{\oplus}R_7R_7R_8$ $A^{\ominus}$ group,

each $R_6$ independently is hydrogen or $(C_{1-4})$alkyl,

each $R_7$ independently is $(C_{1-4})$alkyl

$R_8$ is $(C_{1-4})$alkyl, phenyl$(C_{1-4})$alkyl, $—CH_2OCH_3$ or $—C_2H_4CONH_2$,

$A^{\ominus}$ is a non-chromophoric organic or inorganic anion, and non-quaternary amine groups may be protonated.

By "halogen" is meant fluorine, chlorine, bromine or iodine.

Preferred anions $A^{\ominus}$ include halide, particularly chloride and bromide, sulphate, methylsulphate, acetate and lactate.

Preferred compounds (d) are of formula VI

$$Y_1—R'_1—Y_1 \qquad \text{VI}$$

in which

each $Y_1$ independently is chlorine or bromine

and $R'_1$ is a group (α) in which $R_2$ is $R'_2$ where $R'_2$ is Cl, —OH, $—OCH_3$, $—NH(CH_2)_{2-3}—NH_2$, $—NH(CH_2)_{2-3}—N(CH_3)_2$ or $—NH(CH_2)_{2-3}—N^{\oplus}(CH_3)_3$ $A^{\ominus}$ or a group (β) in which $R_2$ is $R'_2$ and $R_3$ is $R'_3$ where each $R'_3$ is independently $(C_{1-4})$ alkylene

or a group

$$(\gamma_1) \qquad —CH_2—R_9—CH_2—$$

$$(\gamma_2) \qquad —CH_2—R_{10}—\underset{\displaystyle R_{11}}{\underset{|}{N}}—R_{10}—CH_2—$$

$$\text{or } (\gamma_3) \qquad —CH_2—R_{10}\overset{\displaystyle R'_4}{\overset{|}{\underset{\displaystyle R'_4}{\underset{|}{N^{\oplus}}}}}—R_{10}—CH_2 \quad A^{\ominus}$$

in which

each $R'_4$ independently is $C_{1-4}$alkyl,

$R_9$ is a direct bond, —CHOH or a $(C_{2-10})$alkylene group which may be interrupted by up to 3 —O— atoms

each $R_{10}$ independently is a $(C_{1-5})$alkylene group which may be interrupted by up to 3 —O— atoms and $R_{11}$ is hydrogen or $(C_{1-4})$alkyl.

Particularly preferred compounds (d) are of formula VII, VIII or IX

$$HN(CH_2CH_2Cl)_2 \qquad \text{VII}$$

$BrCH_2CH_2Br$ VIII

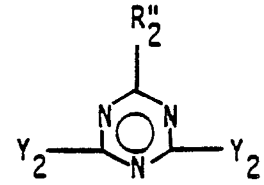

IX

in which

both $Y_2$'s are identical and are Cl or Br

$R_2''$ is Cl or $—NH—C_3H_6—N^{\oplus}(CH_3)_3\ A^{\ominus}$

where $A^{\ominus}$ is $Cl^{\ominus}$ or $CH_3SO_4^{\ominus}$.

Compound VII is preferably in acid addition salt form e.g. $H_2N^{\oplus}(CH_2CH_2Cl)_2\ Cl^{\ominus}$.

The reaction with polymeric compound (A) is preferably carried out in water or an organic solvent at a temperature of from −5° to 130°C, preferably 15—70°C, and under neutral to mildly alkaline conditions.

Suitably from 0.1 to 3 molar equivalents (i.e. from 0.05 to 1.5 moles) of compound (d) for each equivalent of the polymeric compound (A), based on the number of functional groups in the original amine. More preferably from 0.2 to 0.5 molar equivalents of (d) are used for each equivalent of (A).

The compounds of formula (d) are known or can be prepared in conventional manner from available starting materials.

The polymeric compound is applied to the fibres in a concentration which allows at least 0.6% wt. of the polymeric compound, based on the dry fibre weight (w/wf) to become fixed onto the fibres. The nature of the fixation is not fully understood, possibly involving chemical bonding to available fibre groups such as hydroxyl groups on cellulose, but fixed compound is not removed by repeated washing. If the fibres are blended with fibres which do not take up the compound or take it up only minimally, then either these fibres are excluded from the fibre weight in calculating the concentration of compound, or an adjustment is made to account for any compound they take up.

Preferably 0.6 to 2% w/wf of compound becomes fixed to the fibres in the pretreatment. This range covers the values at which most fibres which take up the compound in significant amounts reach or approach saturation of fixed compound. For example, most cottons give saturation values of 0.6 to 0.9% w/wf, standard viscose rayons give higher values of 0.7 to 1.0% w/wf, and highly absorptive viscous rayons such as "Viloft" (Registered Trademark of Courtaulds PLC) give even higher values of 1.0 to 1.3% w/wf. More preferably from 0.7 to 1.3% w/wf remains fixed.

If even dyeing is to be achieved, then compound applied in the pretreatment needs to be taken up evenly and this requires a sufficient concentration of compound to be used. In exhaustion processes, too low a concentration of compound leads to premature exhaustion of the bath and hence uneven take-up. In continuous processes such as padding too low a concentration of compound can lead to a reduction of that concentration during processing; this is known as tailing. This and other factors lead to uneven application.

Even take-up is promoted if the concentration of the compound applied is sufficiently high to allow the take-up of fixed compound to reach or approach the saturation value for the fibres concerned. In commercial practice it is better to provide a safety margin by applying the compound at a higher concentration than the saturation value and subsequently washing off unfixed compound. Solution concentrations usually will be higher than the concentration which it is intended to apply to the fibres to take account of the fact that percentage exhaustion or percentage expression is usually less than 100%. Percentage exhaustions and percentage expressions of 70 to 80% are common. On the other hand, solution concentrations usually may be reduced by an appropriate amount if the fibres to be pretreated are blended with fibres which are unaffected or minimally affected by the pretreatment. Where 100% of the fibres accept the pretreatment, suitable solution concentrations will usually be in the range 1.0 to 5% w/wf.

Swiss Patent No. 386,983 discloses a process for dyeing cellulose fabrics pretreated with compound (A) in which the application is by padding using a solution concentration of 2 or 3 g/litre at an expression of 80% (Examples). This produces a take-up of 0.16 to 0.24% w/wf, of which a significant percentage will be unfixed. At these low concentration levels, the process cannot be operated satisfactorily under commercial conditions because of tailing and uneven take-up of compound. Moreover, the residual unfixed compound, which is not removed by rinsing, would not be wet fast. The process never, in fact, became commercial.

The pretreatment compound may be applied at a pH within a wide range, pH 3.5 to 13; preferably pH 5—11. In an exhaust process of application, which may be from a long or short bath, optimum exhaustion is favoured by starting off with a weakly acidic bath and then after heating the bath up from room temperature to a temperature of 50°C to 100°C, making the bath alkaline (for example pH 9 to 11) by the addition of sodium carbonate to control the exhaustion and fixation. The concentration of sodium carbonate preferably is in the range 0.5 to 5% w/wf, most preferably at about half the concentration of the pretreatment agent. Excessive alkalinity causes deactivation of the groups available for dyeing, probably as a result of cross-linking of the compound, and for that reason it is preferred to avoid the use of caustic alkali, or concentrations of sodium carbonate of greater than 6% w/wf. Padding may be carried out over the range of pH specified.

If, as is preferred, excess pretreatment compound is applied to the fibres, then the fibres are subsequently washed to remove unfixed compound. Dyeing by the exhaust method may be carried out on the wet pretreated fabric, but for pad-dyeing or printing, an intermediate drying usually is required. Drying temperatures of 70° to 120°C are suitable, but when the pretreatment compound contains N-methylol groups, care needs to be taken that cross-linking does not become too extensive during drying since this may hinder uptake of dye. When N-methylol groups are present, it is preferred to carry out a final heat-curing step after the pretreatment and dyeing, printing or brightening steps. The substrate may for example be dried at 70—120°C and finally cross-linked at a temperature of 130—180°C for 2 to 8 minutes, or alternatively simultaneously dried and cross-linked by heat treatment at 100—200°C, preferably 140—180°C for 5 seconds to 8 minutes depending on the temperature. A preferred process involves heating the substrate to 170—180°C for 30 seconds to 1 minute.

Dyeing of the pretreated fibres may be carried out over a broad range of pH 3.5 to 13, under conditions which vary from these conventionally used with a particular type of dye to conditions which it is only possible to use satisfactorily on the pretreated fibres. For example, the usual alkaline fixation of reactive dyes may be used and this gives substantial improvements in colour yield, 30% and greater, with normal or improved wet fastness; and light fastness which are either unchanged or marginally reduced. Dyeing times and dye usages may also be reduced.

On the other hand, new dyeing routes with important commercial implications are made possible by the pretreatment. Thus, most reactive dyes may be applied under acidic or neutral conditions, generally in the range pH 4.0 to 7.0. This also applies to direct dyes stable under acid conditions, acid dyes, and pre-metallised acid dyes. Under acid conditions, very efficient exhaustion and excellent fixation may be achieved, especially if the dye applied on weight of fabric is controlled in strict ratio to the pretreatment compound applied. There is also reduced dye hydrolysis and, coupled with the efficient dye uptake, this results in minimal clearing being required. In addition there are considerable savings in dye costs and chemical costs, particularly for alkali, which may be eliminated in many cases, but also for water and electrolyte. Other cost savings derive from reduced dyeing times, lower energy requirements and a reduction in effluent.

An important effect of being able to dye with reactive dyes under acidic conditions is on the dyeing of polyester/cellulosic blends with mixtures of reactive and disperse dyes. Current commercial processes dye the components sequentially in a two bath process, with the full cycle lasting about 8.5 hours in the most efficient systems and commonly 12 hours or more. With cellulosic fibres pretreated according to the process of the invention, dyeing of both components may proceed simultaneously in a single bath over about 3.5 hours. This drastic reduction in dyeing time, energy and usage of chemicals and equipment has a major impact on the cost of dyeing polyester/cellulosic blends.

In addition to exhaustion processes, the pad-batch system may be used with reactive dyes. Under alkaline conditions, colour yields are greatly improved giving large savings in dye costs. Under acid conditions, equivalent colour yields are obtainable, with the complete elimination of alkali from the dyebath and better control of the dyeing process. In addition, excellent fixation may be achieved over much reduced batching times, with a reduction in the duration and severity of the subsequent washing stage.

Chrome dyes are used mainly for dyeing wool and are not suitable for dyeing untreated cellulosic fibres. However, they are capable of giving deep dyeings on cellulosic fibres pretreated according to the process of the invention with good wet fastness and light fastness.

Cellulosic fabrics which have been pretreated according to the process of the invention may be printed using reactive dyes and give good print fixation on normal drying without the need for steam fixation. Colour yields are also improved, reducing the need for pre-mercerising. The polymeric compound itself may be printed onto the fabric so that subsequent dyeing of the fabric produces differential colour patterning.

Rapid fixation on drying also allows continuous processing using a pad dye/fix/wash off sequence. This includes pad/thermosol processes on polyester/cellulosic blends and also on 100% cellulosics.

Tone-in-tone and differential dyeing effects may be obtained by using cellulosic fibres which have been pretreated according to the process of the invention in combination with untreated cellulosic fibres. For example, 100% cotton fabrics may be knitted or woven in a pattern such as stripes defined by treated and untreated yarns, to give ecru fabric which may be dyed on demand in various colourways. High, medium and low contrast tone-in-tone effects may be achieved using reactive dyes applied under alkaline conditions or mildly acidic conditions. Dye selection can be used to produce differential dyeing.

A further advantage using direct or reactive dyes is the covering of 'dead' cotton (immature fibres which tend to clump together and are dyed less easily), enabling the usual white specks on the dye fabric to be eliminated. The same applies to "miniblends" comprising cotton with small quantities of synthetic fibres such as polyester.

The following Examples, in which all parts and percentages are by weight and in the case of pretreatment bath or dyebath compositions are based upon the dry weight of substrate, and temperatures are in degrees Centigrade, illustrate the invention.

Example 1

Preparation of Compound (A)

Diethylenetriamine (103 parts) is mixed with dicyandiamide (84 parts) and the mixture is heated to a temperature of 110° whilst being stirred continuously. At 110°, the reaction becomes exothermic and ammonia is given off. The mixture is then heated slowly over a period of 6 hours to a temperature of 160° until ammonia ceases to be liberated. The total amount of ammonia given off is approximately 34 parts. The reaction product is poured out of the reaction vessel whilst fluid and is allowed to solidify to a powder.

69.3 Parts of the powder are added slowly to 81 parts of water at a temperature of 35°C whilst stirring, and then 53.4 parts of 44.6 per cent (wt) sulphuric acid are added together with 45 parts of ice so that the temperature does not rise above 48° to 50°. The sulphate addition salt is formed as an aqueous solution, and is converted into a solid powder by spray drying. This product is referred to as compound A1.

Examples 2 to 12

Pretreatment with compound A

Example 2

a) A 100 per cent cotton knitted towelling fabric is immersed in an aqueous bath comprising:—

| | |
|---|---|
| Compound A1 | 2% |
| Acetic acid | 0.25 ml/litre |

The bath is initially at room temperature and at a pH of 5.5, the liquor to goods ratio being 10:1. The bath is heated up to a temperature of 70° at a rate of 4°/min and then 1.0 per cent sodium carbonate is added to the bath over 10 minutes. Treatment at 70° is continued for 10 minutes, after which the bath is drained and the treated fabric rinsed successively with warm then cold water. The amount of compound (A) fixed on the fabric was found to be 0.74% (See test method)

b) the treated fabric is then dyed at a liquor to goods ratio of 10:1 in an aqueous dyebath set at a temperature of 50° and comprising:—

| | |
|---|---|
| C.I. Reactive Yellow 84 | 0.25% |
| C.I. Reactive Red 120 | 1.0% |
| C.I. Reactive Blue 172 | 3.2% |
| Matexil PAL an anti-reducing agent) | 1.0 g/l |

After 10 minutes, the temperature of the dyebath is raised to 85° at a rate of 2°/min and dyeing is continued at that temperature for 15 minutes. 80 g/l of sodium chloride is then added to the dyebath over 30 minutes, and after a further 45 minutes, 20 g/l of sodium carbonate is added over 20 minutes. Dyeing is continued for a further 60 minutes, and the dyed fabric rinsed in warm then cold water. This rinse sequence is repeated after washing off the fabric in an aqueous soap bath containing 2 g/l soap flakes at the boil for 20 minutes. Finally, the fabric is dried. A navy blue dyeing exhibiting no 'dead' cotton specks is obtained, whereas a control dyeing without pretreatment exhibits white specks. In comparison with the control, the dyeing of the example has improved colour yield, wet fastness and stability, while light fastness is not reduced.

Example 3

a) A knitted interlock fabric comprising 50 per cent cotton yarn and 50 per cent polyester (polyethylene terephthalate) yarn is given a pre-treatment with compound A1 according to the procedure of Example 2 but using 3 per cent compound A1 and 1.5 per cent sodium carbonate.

b) The treated fabric is immersed at a 10:1 liquor to goods ratio in an aqueous dyebath at room temperature comprising:—

| | |
|---|---|
| C.I. Disperse Violet 33 | 0.66% |
| C.I. Disperse Orange 76 | 0.175% |
| C.I. Reactive Red 2 | 2.60% |
| C.I. Reactive Orange 14 | 1.70% |
| Acetic acid | 0.5 g/l |
| Uniperol EL (a non-ionic dispersing agent) | 1.0 g/l |
| sodium sulphate | 60.0 g/l |

The bath is heated to a temperature of 125° at a rate of 2°/min and kept at that temperature for 45 minutes before being cooled to 80°. 2 g/l of sodium hydroxide is added to the dyebath, and then after a further 15 minutes of dyeing the fabric is rinsed first in cold water and then in water at a temperature of 70° before being dried.

An even dyeing in a full shade of claret is obtained. The overall dyeing time is about 3.5 hours, which compares with a time of at least 8.5 hours for the normal commercial sequence for dyeing polyester/cotton blends using a two bath process.

Example 4

a) A 100 per cent cotton knitted interlock fabric is given a pre-treatment with compound A1 as in Example 1.

b) The treated fabric is dyed with a direct dye from an aqueous dyebath set at a temperature of 50° and comprising:—

| | |
|---|---|
| C.I. Direct Blue 189 | 2.0% |
| Sandopur DK (a levelling agent) | 1.0 g/l |

The liquor to goods ratio is again 10:1 by weight. The dyebath is heated up to a temperature of 100° at a rate of 1.5°/min and then 10 g/l of sodium chloride is added, with dyeing continuing for a further 45 minutes. After cooling the dyebath the fabric is rinsed in cold water and then dried.

A blue dyeing with improved colour yield compared to a control fabric dyed in the same manner but without pretreatment, is obtained.

Example 5

a) A 100 per cent cotton knitted interlock fabric is given a pre-treatment with compound A1 as in Example 3.

b) The treated fabric is dyed at a liquor to goods ratio of 10:1 with a pre-metallised acid dye in an aqueous dyebath set at a temperature of 50° and comprising:—

| | |
|---|---|
| C.I. Acid Red 282 | 2.0% |
| Acetic acid | 0.5 g/l |

The dyebath is heated to a temperature of 100° at a rate of 2°/min and dyeing is continued at the boil for 30 minutes before the bath is cooled and drained. The dyed fabric is rinsed in cold water and then dried. A deep red dyeing with good light fastness is obtained.

Example 6

a) A 100 per cent cotton knitted interlock fabric is given a pre-treatment with compound A1 as in Example 3.

b) The treated fabric is dyed at a liquor to goods ratio of 10:1 with a chrome dye normally used for dyeing wool, from an aqueous dyebath set at a temperature of 50° and comprising—

| | |
|---|---|
| C.I. Mordant Black 13 | 5.0% |
| Acetic acid | 1.0% |
| Sodium sulphate | 10.0% |

The dyebath is heated to a temperature of 100° at a rate of 2°/min and then, after a further 30 minutes, 2

per cent formic acid is added. Dyeing is continued for 15 minutes and then the dyebath is cooled to a temperature of 80° and 1.5 per cent potassium dichromate is added. The temperature of the bath is raised to 100° again and dyeing is continued for 30 minutes before the dyebath is finally cooled and drained. The dyed fabric is given successive rinses in warm and then cold water, and then dried.

The fabric is evenly dyed to a full shade of black.

Example 7

a) A 100 per cent cotton knitted towelling fabric is pretreated with compound A1 as in Example 2.

b) After drying, the fabric is dyed according to the pad/batch system using reactive dyes. The aqueous pad bath comprises:—

| | |
|---|---|
| C.I. Reactive Orange 47 | 9.0 g/l |
| C.I. Reactive Red 2 | 62.0 g/l |
| C.I. Reactive Brown 10 | 9.0 g/l |
| Sodium carbonate | 25.0 g/l |

The fabric is padded with the dye liquor at an uptake of 70 per cent and then plaited into a box and covered with polyethylene film. After being left in this batched state for 1 hour, the fabric is rinsed, soaped at the boil, and then rinsed again as described in Example 2. The fabric is then dried.

Compared with a control fabric for which the pretreatment with compound (A1) is omitted and a dwell time of 4 hours is necessary, the dyed fabric has a substantially improved colour yield.

Example 8

b) Two further quantities of the pre-treated fabric of Example 7 (a) are dyed by the pad batch system as described in Example 7 b) using the following pad baths:

| | | |
|---|---|---|
| 1) | C.I. Reactive Blue 109 | 30 g/l |
| | Sodium carbonate | 25 g/l |
| 2) | C.I. Reactive Blue 109 | 30 g/l |
| | Sodium carbonate | — |

Blue dyeings of substantially the same colour yields are obtained.

Example 9

a) A 100% cotton fabric is treated with an aqueous bath containing 3% of compound A1 and 2 g/l caustic soda (pH 13) at a liquor to goods ratio of 20:1, at 60° for 30 minutes. The treated fabric is rinsed cold, neutralised with acetic acid and dried.

b) The pretreated fabric is dyed by standard methods with 2% of the dyestuff of Example 1 of British published patent application 2,111,538 A. A deep yellow dyeing is obtained having superior fastness properties in comparison with a similar dyeing without pretreatment.

Example 10

b) The pretreated fabric of Example 9 (a) is dyed by a standard exhaust method with C.I. Acid Red 128. The substrate is dyed more deeply and with better fastness properties than a comparable dyeing without pretreatment.

Example 11

a) A 100% cotton fabric is treated with 1.0% of product A1 in an aqueous bath at pH 10, 60°, for 20 minutes. The fabric is then rinsed, neutralised and dried.

b) The pretreated fabric is dyed by a shortened pad-batch process using a reactive dye under acidic conditions.

The fabric is padded with a solution containing 27 g/l C.I. Reactive Red 171 and acetic acid to adjust to pH 4.5, and squeezed out to 80—90% pickup. The fabric is rolled up, wrapped in plastic film and left for 30 min at room temperature. The dyed fabric is cold and warm rinsed, and then dried. In spite of the short dwell time, a deeper dyeing is obtained than with the same dyeing process without pretreatment, and good fastness properties are also obtained.

Example 12

b) The pretreated fabric of Example 11 (a) is dyed in an exhaust process at a liquor to goods ratio of 20:1 in a dyebath containing:

| | |
|---|---|
| C.I. Reactive Blue 193 | 5% |
| Sodium chloride | 25 g/l |
| acetic acid | to pH 4.5 |

A deep blue dyeing with good fastness properties is obtained.

Similar good dyeings may also be obtained using the following reactive dyes:—

| | |
|---|---|
| C.I. Reactive Blue 114 | 5% |
| C.I. Reactive red 123 | 3% |
| C.I. Reactive Yellow 111 | 2.5% |

Aftertreatment of the dyed fabric with the same quantities of compound A1 can give further improvement of wet fastness properties.

Examples 2 to 12 may be repeated using, instead of compound A1, the compounds described in Examples 2 and 4 to 12 of US Patent 4,410,652 as intermediate products, i.e. before reaction with N-methylol compounds.

Examples 13 to 18

Pretreatment with compound (A)

Example 13

a) A 100% cotton knitted interlock fabric is scoured and bleached in conventional manner and then pre-treated with compound (A1), rinsed and dried, all as described in Example 2 but using 1.65% compound (A1).

b) The fabric is then dyed at a liquor to goods ratio of 20:1 using reactive dyes in an aqueous dyebath adjusted to pH 5.5 with acetic acid, and containing

| | |
|---|---|
| C.I. Reactive Yellow 7 | 0.135% |
| C.I. Reactive Red 6 | 0.105% |
| C.I. Reactive Blue 163 | 0.125% |

The temperature is raised from room temperature to the boil at a rate of 1.5% minute and dyeing is continued at that temperature for 20 minutes. The fabric is rinsed, soaped, rinsed, hydro-extracted and dried as described in Example 2. The resultant fabric is uniformly dyed to a pale khaki shade having excellent wet and good light fastness.

Example 14

a) A woven fabric comprising 50% viscose rayon fibres and 50% polyester (polyethylene terephthalate) fibres is pre-treated with compound (A1), rinsed, and dried, all as described in Example 2 but using 1.1% compound (A1).

b) The pre-treated fabric is then padded with the following aqueous dye liquor at a pickup of 80%.

| | |
|---|---|
| C.I. Disperse Black 117 | 0.7 g/l |
| C.I. Reactive Black 8 | 1.2 g/l |
| C.I. Reactive Red 8 | 0.14 g/l |
| C.I. Reactive Yellow 7 | 0.083 g/l |
| Permafresh LR-2 (Glyoxal reactive resin) | 120 g/l |
| Magnesium chloride hexahydrate | 20 g/l |
| Warcosoft NI −150 (Non-ionic softener) | 20 g/l |
| acetic acid to pH 5—5.5 | |

The pad-dyed fabric is dried in an oven at a temperature of 110° and then heated to a temperature of 180° for 30 seconds to cure the applied resin.

The resultant fabric is evenly dyed to a grey shade of good wet and light fastness properties.

Example 15

a) 100% cotton yarn is wound onto perforated plastic formers to produce standard liquor-permeable packages. The packages are loaded onto a conventional pressurised package dyeing machine for processing at a liquor to goods ratio of 10:1.

Firstly, the packages are scoured in conventional manner and thoroughly rinsed. Then an aqueous pre-treatment bath is prepared containing 1.65% compound (A1) and adjusted to pH 5.5 with acetic acid. This pre-treatment bath is circulated in the package dyeing machine using the normal alternating circulation, and heated to a temperature of 70° at a rate of 3°/minute. 1% sodium carbonate is then added to the bath and the pretreatment continued for a further 15 minutes. The pretreated yarn packages are then thoroughly rinsed, hydroextracted and dried.

b) Subsequently, interlock fabric is knitted from the pretreated yarn in bands of courses which alternate with bands of courses knitted from untreated cotton yarn. The knitted fabric is scoured and dyed at a liquor to goods ratio of 20:1 using a wool reactive dye in an aqueous dyebath and initially at ambient temperature.

The dye liquor comprising:—

| | |
|---|---|
| C.I. Reactive Blue 94 | 2% |
| Acetic acid (to pH 5.5) | |

is raised to the boil at 2° per minute and dyeing is continued at this temperature for 30 minutes. The bath is then drained and the fabric rinsed in cold water, cleared in water at 80° for 15 minutes and finally rinsed in cold water and dried.

The courses of pretreated yarn are dyed to a full blue shade whilst the courses of untreated cotton yarn remain undyed. The resultant fabric presents blue stripes against a white background.

Example 16

a) A woven fabric comprising 50% Viloft viscose rayon yarn and 50% polyester (polyethylene terephthalate) yarn is processed on a beam dyeing machine. The fabric is initially pretreated according to the procedure outlined in Example 2 but using 1.65% compound (A1) and 1.5% sodium carbonate.

b) The pretreated material is thoroughly rinsed in warm water to remove all unfixed pretreating agent and is then dyed using the following dye liquor at a liquor to goods ratio of 10:1

| | |
|---|---|
| C.I. Disperse Orange 30 | 0.7% |
| C.I. Disperse Red 73 | 1.0% |
| C.I. Reactive Red 8 | 1.7% |
| C.I. Reactive Red 2 | 0.85% |
| C.I. Reactive Brown 23 | 0.45% |
| Polyron 1057 (dyebath buffer and metal chelating auxiliary) | 1 g/l |
| Sodium sulphate | 30 g/l |
| acetic acid to pH 5—5.5 | |

The dyebath is heated up to a temperature of 125° at a rate of 2°/minute and maintained at that temperature for 20 minutes before being allowed to cool to a temperature of 80°.

The dyebath is then dropped, after which the fabric is rinsed, soaped and rinsed as described in Example 2. The fabric is then neutralised in acetic acid, hydroextracted and dried.

The resulting fabric is evenly dyed to a full shade of red with good wet and light fastness properties.

Example 17

a) A 100% cotton interlock fabric is pretreated with 1.65% of compound (A1) as detailed in Example 2.

b) After drying, the fabric is screen printed with the following formulation:—

| | |
|---|---|
| C.I. Reactive Violet 33 | 40 g |
| Sodium bicarbonate | 10 g |
| Manutex F (8% solution) | 600 g |
| water | 350 g |
| | 1,000 g |

The printed material is dried at a temperature of 110° and then washed off with water at a temperature of 80° before being rinsed with cold water and finally dried.

Prints of very good yield and fastness are achieved. The yields and fastness are equal to or better than those achieved when identical prints are fixed by a conventional steaming technique.

Example 18

a) A 100% cotton towelling fabric, previously scoured in a pressurised Kier, is pretreated with compound (A1) by a wet-on-wet technique.

The excess water present in the scoured and rinsed fabric is removed by passing the material through a pad mangle. The fabric is then impregnated in pad-trough containing:—

| | |
|---|---|
| Compound (A1) | 27.5 g/l |
| Sodium bicarbonate | 1.0 g/l |

and the excess liquor is removed by passing the fabric through a second pad-mangle set to give a final expression of 80%. The impregnated fabric is thoroughly rinsed to remove excess compound (A1), hydroextracted and dried.

b) The pretreated fabric is passed through a pad-through containing:—

| | |
|---|---|
| C.I. Reactive Blue 168 | 30 g/l |
| Acetic acid (to pH 5.0—5.5) | 0.5 ml/l |

The padding fabric is then passed through a second pad mangle set to give an expression of 70%.

The impregnated fabric is dried at a temperature of 110° and then given a thermosol heat treatment for

30 seconds at a temperature of 180°. Subsequently the fabric is rinsed, soaped off at the boil, rinsed and dried.

The fabric is dyed to a uniform, well penetrated medium navy blue shade exhibiting good light and very good wet fastness properties.

A control fabric, which has not been pretreated with compound (A1) is otherwise processed in an identical manner. The resulting fabric is dyed only to a pale, non-uniform shade, approximately one third of the depth of the pre-treated material.

c) A further sample of pretreated fabric is dyed by the process described but with the dyebath also incorporating 100 g/l of urea.

The resulting fabric is 50% deeper in shade than the shade achieved in the absence of urea and the dyeing has good light and very good wet fastness properties.

The pad-thermosol route described is also suitable for polyester/cellulosic blends.

Test Method

To determine the amount of polymeric compound fixed to the fibre, the treated substrate is rinsed with cold water for 5 min. with agitation, then rinsed with warm (60°C) water for 5 min., then dried.

The nitrogen content of the dried treated fibre is determined by semimicro Kjedahl analysis, and from this is subtracted the nitrogen content of the untreated fibre. The nitrogen content of the cationic polymeric compound is also known, and from this the %wt. of compound fixed on the fibre may be calculated. Thus, if the % nitrogen content of the treated fibre is $X_1$% and of the untreated fibre is $X_o$% and of the pure polymeric compound is Y%, then the %wt. of compound fixed is given by

$$\frac{(X_1 - X_o)}{Y} \cdot 100\%$$

**Claims**

1. A process for the dyeing, printing or optical brightening of cellulosic textile fibres by pretreating the fibres before the dyeing, printing or brightening step with a polymeric compound comprising

(A) a polymeric reaction product of a monofunctional or polyfunctional amine having one or more primary and/or secondary and/or tertiary amino groups with cyanamide, dicyandiamide, guanidine or bisguanidine in which up to 50 mole per cent of the cyanamide, dicyandiamide, guanidine or bisguanidine may be replaced by a dicarboxylic acid or a mono- or di-ester thereof, said product (A) containing at least one free hydrogen atom linked to a nitrogen atom;

said polymeric compound being either in free base or wholly or partly in acid addition salt form; characterized in that the pretreatment process comprises applying the polymeric compound to the fibres in a concentration which allows at least 0.6% wt. of the polymeric compound, based on the dry fibre weight to become fixed to the fibres, and subsequently rinsing the fibres to remove any unfixed compound.

2. A process according to Claim 1 in which the fibres are dyed with a direct dye of formula I or II

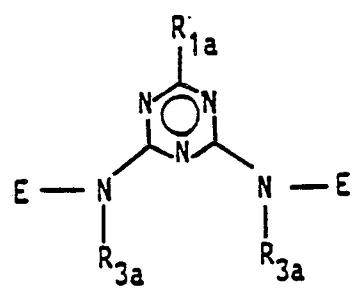

I

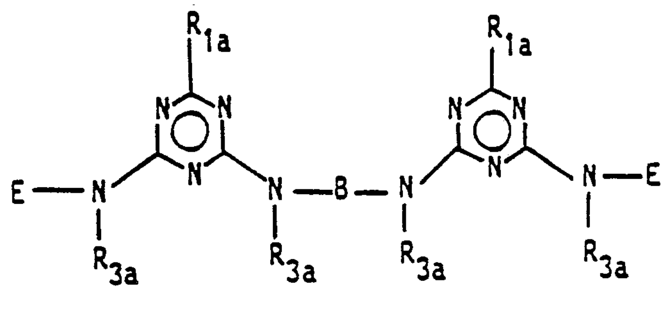

II

in which

each $R_{3a}$ independently is hydrogen; $(C_{1-4})$alkyl; or $(C_{1-4})$alkyl substituted by one —OH, —CN or phenyl group;

$R_{1a}$ is Cl or F, particularly Cl

E are identical or different chromophoric groups

and B is a direct bond or a divalent aliphatic, aromatic, cycloaliphatic or heterocyclic bridging group, or forms a heterocyclic bridging group together with the two

$$\begin{array}{c}-N-\\ |\\ R_{3a}\end{array}$$

groups to which it is joined.

3. A process according to Claim 1 or Claim 2 in which the polymeric compound (A) is the reaction product of an amine of formula III

$$R—NH—R \qquad III$$

or a polyalkylene polyamine of formula IV

$$RRN\text{—}(Z\text{—}X)_n\text{—}Z\text{—}NRR \qquad IV$$

in which

each R independently is hydrogen or a $C_{1-10}$alkyl group unsubstituted or monosubstituted with hydroxy, $C_{1-4}$alkoxy or cyano,

n is a number from 0 to 100

Z, or each Z independently when n>O, is $C_{2-4}$ alkylene or hydroxyalkylene

and X, or each X independently when n>1, is —O—, —S— or —NR— where R is as defined above, provided that the amine of formula IV contains at least one reactive —NH— or —$NH_2$ group, with cyanamide, dicyandiamide (DCDA), guanidine or bisguanidine.

4. A process according to Claim 3 in which the polymeric compound (A) is the reaction product of DCDA with diethylenetriamine or triethylenetetraamine.

5. A process according to any one of the preceding claims, in which the polymeric compound is applied to the fibres by exhaust application.

6. A process according to Claim 5 in which the exhaustion process is carried out by starting off with a weakly acidic bath at room temperature, heating to 50—100°C then making the bath alkaline by addition of sodium carbonate.

7. A process according to Claim 6 in which the bath is brought to a pH of 9—11 by addition of from 0.5 to 5% w/wf of sodium carbonate.

8. A process according to any one of the preceding claims in which the pretreated fibres are dyed with a reactive dye at a pH from 4 to 7.

9. A process according to any one of Claims 1 to 8 comprising aftertreating the said substrate with the reaction Product of A, defined in Claim 1 with a) an N-methylol derivative of a urea, melamine, guanamine, triazine, urone, urethane or an acid amide; or the reaction product of Product A with c) formaldehyde or a formaldehyde precursor optionally together with a catalyst which further increases the wet-fastness properties of the dyeing and at the same time imparts a crease resistant finish to the substrate.

10. A process according to any one of Claims 1 to 8 comprising aftertreating the fibres with the reaction product of (A) defined in Claim 1 with (d) an organic compound containing at least two groups capable of being split off as anions on reaction with A.

**Patentansprüche**

1. Ein Verfahren zum Färben, Bedrucken oder optischen Aufhellen von textilen Cellulosefasern durch Vorbehandlung der Fasern, vor der Färbe-, Druck- oder Aufhellstufe, mit einer polymeren Verbindung enthaltend

(A) ein polymeres Umsetzungsprodukt eines monofunktionellen oder polyfunktionellen Amins, das eine oder mehrere primäre und/oder sekundäre und/oder tertiäre Aminogruppen aufweist, mit Cyanamid, Dicyandiamid, Guanidin oder Bisguanidin, worin bis zu 50 Mol% des Cyanamids, Dicyandiamids, Guanidins oder Bisguanidins durch eine Dicarbonsäure oder einen Mono- oder Diester davon ersetzt sein können, wobei das genannte Produkt (A) mindestens ein freies Wasserstoffatom an ein Stickstoffatom gebunden enthält;

wobei die polymere Verbindung in Form der freien Base oder gänzlich oder teilweise in Form des Säureanlagerungssalzes vorliegt; dadurch gekennzeichnet, dass das Vorbehandlungsverfahren das Applizieren der polymeren Verbindung auf die Fasern in einer solchen Konzentration, dass mindestens 0,6 Gew.% der polymeren Verbindung, bezogen auf das Trockengewicht der Faser, auf die Fasern fixiert werden kann, und danach Spülen der Fasern zur Entfernung von nicht-fixierter Verbindung beinhaltet.

2. Ein Verfahren gemäss Anspruch 1, worin die Fasern mit einem Direktfarbstoff der Formel I oder II

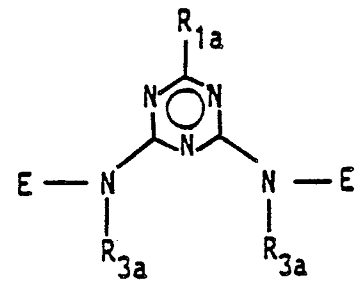

I

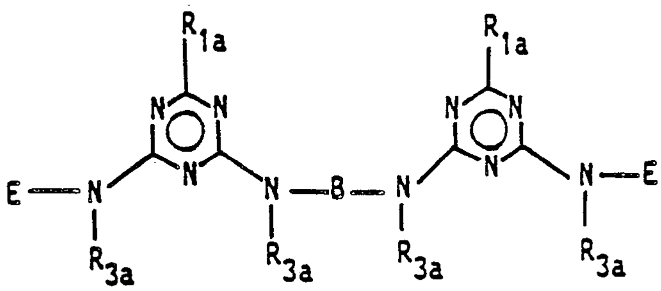

II

worin

$R_{3a}$ jeweils unabhängig voneinander Wasserstoff, $C_{1-4}$-Alkyl oder durch ein —OH, —CN oder eine Phenylgruppe substituiertes $C_{1-4}$-Alkyl,

$R_{1a}$ Cl oder F, insbesondere Cl,

E gleiche oder verschiedene chromophore Gruppen

und B eine direkte Bindung oder eine zweiwertige aliphatische, aromatische, zykloaliphatische oder heterozyklische Brückengruppe oder zusammen mit den zwei —N($R_{3a}$)-Gruppen, an welche es gebunden ist, eine heterozyklische Brückengruppe bedeuten,

gefärbt werden.

3. Ein Verfahren gemäss Anspruch 1 oder Anspruch 2, worin die polymere Verbindung (A) das Umsetzungsprodukt eines Amins der Formel III

$$R—NH—R \qquad III$$

oder eines Polyalkylenspolyamins der Formel IV

$$RRN-(Z—X)_n-Z—NRR \qquad IV$$

worin

R jeweils unabhängig voneinander Wasserstoff oder eine unsubstituierte oder durch Hydroxy, $C_{1-4}$-Alkoxy oder Cyan monosubstituierte $C_{1-10}$-Alkylgruppe

n eine Zahl von 0 bis 100

Z oder jedes Z unabhängig voneinander, wenn n>0 ist, $C_{2-4}$-Alkylen oder -Hydroxyalkylen

und X oder jedes X unabhängig voneinander, wenn n>1 ist, —O—, —S— oder —NR—, worin R wie oben definiert ist, bedeuten,

mit der Massgabe, dass das Amin der Formel IV mindestens eine reaktive —NH— oder $NH_2$-Gruppe enthält, mit Cyanamid, Dicyandiamid (DCDA), Guanidin oder Bisguanidin ist.

4. Ein Verfahren gemäss Anspruch 3, worin die polymere Verbindung (A) das Umsetzungsprodukt von DCDA mit Diäthylentriamin oder Triäthylentetraamin ist.

5. Ein Verfahren gemäss irgendeinem der vorhergehenden Ansprüche, worin die polymere Verbindung nach dem Ausziehverfahren auf die Fasern appliziert wird.

6. Ein Verfahren gemäss Anspruch 5, worin das Ausziehverfahren durch Beginnen mit einem schwachsauren Bad bei Raumtemperatur, Erwärmen auf 50—100°C und dann Alkalischstellen des Bades durch Natriumcarbonatzugabe, durchgeführt wird.

7. Ein Verfahren gemäss Anspruch 6, worin das Bad durch Zugabe von 0,5 bis 5% Gew./Gew.F. Natriumcarbonat auf einen pH von 9—11 gebracht wird.

8. Ein Verfahren gemäss irgendeinem der vorhergehenden Ansprüche, worin die vorbehandelten Fasern mit einem Reaktivfarbstoff bei einem pH von 4 bis 7 gefärbt werden.

9. Ein Verfahren gemäss irgendeinem der Ansprüche 1 bis 8, beinhaltend das Nachbehandeln des genannten Substrates mit dem Umsetzungsprodukt von A, definiert wie im Anspruch 1, mit a) einem N-Methylolderivat von einem Harnstoff, Melamin, Guanamin, Triazin, Uron, Urethan oder einem Säureamid, oder dem Umsetzungsprodukt des Produktes A mit c), Formaldehyd oder einem Formaldehydvorgänger, gegebenenfalls zusammen mit einem Katalysator, welches die Nassechtheitseigenschaften der Färbung weiter erhöht und gleichzeitig dem Substrat eine knitterbeständige Ausrüstung verleiht.

10. Ein Verfahren gemäss irgendeinem der Ansprüche 1 bis 8, beinhaltend das Nachbehandeln der Fasern mit dem Umsetzungsprodukt von (A), definiert wie im Anspruch 1, mit (d) einer organischen Verbindung, die mindestens zwei Gruppen enthält, welche durch Reaktion mit A als Anionen abspaltbar sind.

**Revendications**

1. Un procédé de teinture, d'impression ou d'azurage optique de fibres textiles cellulosiques par pré-traitement des fibres avant la teinture, l'impression ou l'azurage optique avec un composé polymère comprenant

(A) un produit de réaction polymère d'une amine monofonctionnelle ou polyfonctionnelle ayant un ou plusieurs groupes amino primaires et/ou secondaires et/ou tertiaires avec le cyanamide, le dicyandiamide, la guanidine ou la bisguanidine, dans lequel jusqu'à 50 moles% du cyanamide, du dicyandiamide, de la guanidine ou de la bisguanidine peuvent être remplacées par un acide dicarboxylique ou un mono- ou diester de ce composé, ledit produit (A) contenant au moins un atome d'hydrogène libre lié à un atome d'azote;

ledit composé polymère étant sous forme de base libre ou totalement ou partiellement sous forme d'un sel d'addition d'acide; caractérisé en ce que le procédé de pré-traitement comprend l'application du composé polymère sur les fibres en une concentration qui permet à au moins 0,6% en poids du composé polymère, par rapport au poids des fibres à l'état sec, d'être fixé sur les fibres et ensuite le rinçage des fibres pour éliminer le composé non fixé.

2. Un procédé selon la revendication 1, dans lequel les fibres sont teintes avec un colorant direct de formule I ou II

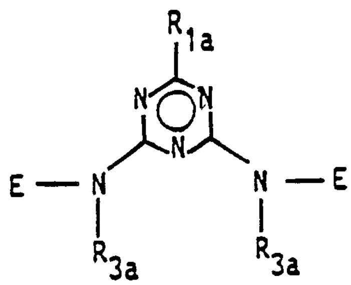

I

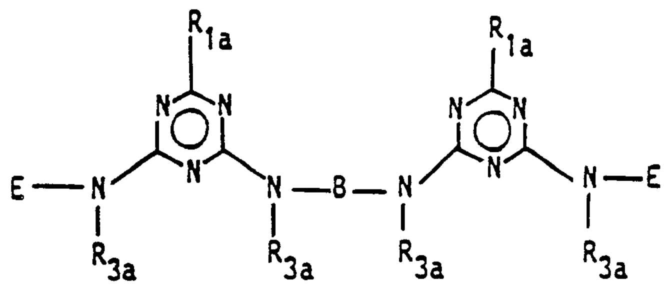

II

dans lesquelles

chaque $R_{3a}$ signifie indépendamment l'hydrogène, alkyle en $C_1$—$C_4$ ou alkyle en $C_1$—$C_4$ substitué par un groupe —OH, —CN ou phényle,

$R_{1a}$ signifie Cl ou F, en particulier Cl,

les symboles E signifient des groupes chromophores identiques ou différents, et

B signifie une liaison directe ou un groupe formant pont divalent aliphatique, aromatique, cycloaliphatique ou hétérocyclique, ou forme un groupe formant pont hétérocyclique avec les deux groupes

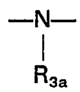

auxquels il est lié.

3. Un procédé selon la revendication 1 ou 2, dans lequel le composé polymère (A) est le produit de réaction d'une amine de formule III

$$R—NH—R \qquad (III)$$

ou d'une polyalkylène-polyamine de formule IV

$$RRN-(Z—X)_n-Z—NRR \qquad IV$$

dans laquelle

chaque R signifie indépendamment l'hydrogène ou un groupe alkyle en $C_1$—$C_{10}$ non substitué ou monosubstitué par un groupe hydroxy, alcoxy en $C_1$—$C_4$ ou cyano,

n signifie un nombre de 0 à 100,

Z, ou chaque Z indépendamment lorsque n>0, signifie un groupe alkylène ou hydroxyalkylène en $C_2$—$C_4$, et

X, ou chaque X indépendamment lorsque n>1, signifie —O—, —S— ou —NR— où R est tel que défini plus haut,

avec la condition que l'amine de formule IV contienne au moins un groupe réactif —NH— ou —$NH_2$, avec le cyanamide, le dicyandiamide (DCDA), la guanidine ou la bisguanidine.

4. Un procédé selon la revendication 3, dans lequel le composé polymère (A) est le produit de réaction du DCDA avec la diéthylènetriamine ou la triéthylènetétramine.

5. Un procédé selon l'une quelconque des revendications précédentes, dans lequel le composé polymère est appliqué sur les fibres par épuisement.

6. Un procédé selon la revendication 5, dans lequel le procédé par épuisement est effectué en opérant au début en bain faiblement acide à la température ambiante, puis en chauffant à 50—100°C, et en alcalinisant ensuite le bain par addition de carbonate de sodium.

7. Un procédé selon la revendication 6, dans lequel le bain est ajusté à pH 9—11 par addition de 0,5 à 5% en poids de carbonate de sodium par rapport au poids des fibres à l'état sec.

8. Un procédé selon l'une quelconque des revendications précédentes, dans lequel les fibres prétraitées sont teintes avec un colorant réactif à un pH compris entre 4 et 7.

9. Un procédé selon l'une quelconque des revendications 1 à 8, comprenant le post-traitement dudit substrat avec le produit de réaction de A, tel que défini à la revendication 1, avec a) un dérivé N-méthylolé de l'urée, de la mélamine, de la guanamine, de la triazine, de l'urone, de l'uréthane ou d'un amide d'acide; ou le produit de réaction du produit A avec c) du formaldéhyde ou un précurseur du formaldéhyde éventuellement ensemble avec un catalyseur qui augmente encore les solidités au mouillé de la teinture et confère en même temps au substrat un apprêt infroissable.

10. Un procédé selon l'une quelconque des revendications 1 à 8, comprenant le post-traitement des fibres avec le produit de réaction de (A) tel que défini à la revendication 1 avec (d) un composé organique contenant au moins 2 groupes susceptibles d'être scindés sous forme d'anions lors de la réaction avec A.